# EUROPÄISCHE PATENTSCHRIFT

(11) **EP 0 894 888 B1**
(45) Veröffentlichungstag und Bekanntmachung des Hinweises auf die Patenterteilung: **14.03.2001**
(21) Anmeldenummer: 98112246.8
(22) Anmeldetag: 02.07.1998
(51) Int. Cl.: D06M 15/263, D06M 15/333, D06M 15/233, D06M 15/248, D06M 15/33, D04H 1/64, D04H 1/60, D06M 23/08

(54) **Pulverförmige, vernetzbare Textilbinder-Zusammensetzung**
Powdery crosslinkable textile binder composition
Composition liante pour textile sous forme de poudre

(30) Priorität: 31.07.1997 DE 19733133
(43) Veröffentlichungstag der Anmeldung: 03.02.1999
(73) Patentinhaber: Wacker-Chemie GmbH, 81737 München (DE)
(72) Erfinder: Kohlhammer, Klaus, Dr., 84533 Marktl (DE); Goetze, Richard, Dr., 84489 Burghausen (DE); Haerzschel, Reinhard, Dr., 84489 Burghausen (DE); Hashemzadeh, Abdulmajid, Dr., 84508 Burgkirchen (DE)
(74) Vertreter: Schuderer, Michael, Dr.

(56) Entgegenhaltungen:
- EP-A- 0 164 554
- EP-A- 0 590 702
- EP-A- 0 731 207
- WO-A-92/22603
- WO-A-97/42367
- FR-A- 2 340 389
- US-A- 4 943 612

## Beschreibung

Die Erfindung betrifft die Verwendung einer pulverförmigen, vernetzbare Textilbinder-Zusammensetzung in Verfahren zur Herstellung von polymergebundenen, textilen Formteilen oder Flächengebilden.

Textile Flächengebilde, die nach den üblichen Methoden zur Herstellung von Nonwovens, beispielsweise nach dem Airlay-, Wetlay- oder Spunlay-Verfahren, produziert werden, benötigen ein Bindemittel zur dauerhaften Fixierung der Fasern sowie zur Erhöhung der Widerstandsfähigkeit gegenüber mechanischer Belastung. Diese Bindemittel basieren üblicherweise auf synthetischen, hochmolekularen Verbindungen und können nach dem Stand der Technik entweder in Form von Feststoffen, beispielsweise als Pulver, Granulat oder Faser, oder in Form von Flüssigkeiten, beispielsweise als wässrige Polymerdispersion oder Lösung, aufgebracht werden. Die erhöhte Festigkeit der Nonwovens resultiert aus der Bindung der Fasern durch die Polymeren, die an der Faser haften und so die Fasergebilde verstärken.

Aus der WO-A 90/14457 ist eine Verfahrensweise bekannt, bei der Glasfasern nach einem Krempelschritt mit thermoplastischem Pulver, beispielsweise Polypropylen, Polyester oder Polyamid, vermischt werden und das Fasergebilde anschließend bei erhöhter Temperatur und unter Druck verfestigt wird. Die AU-B 36659/89 beschreibt ebenfalls ein Verfahren zur Verfestigung von Glasfasermaterialien mittels thermoplastischen Pulvern. Hier wird die Verwendung von Pulvern auf Basis von Polyester oder Polystyrol empfohlen. Nachteilig ist die geringe Festigkeit der so gebundenen Fasergebilde bei Kontakt mit Wasser oder Lösungsmitteln.

Da bei erhöhten Temperaturen häufig auch die Glas- oder die Schmelztemperaturen der Bindemittel überschritten werden, bedarf es einer dauerhaften chemischen Vernetzung der Bindemittel, um den Fasergebilden auch eine Formbeständigkeit bei höheren Temperaturen zu verleihen. Bekannt sind Verfahren zur Verfestigung von Fasermaterialien aus Polyester-, Polyamid-oder Baumwollfasern mit selbstvernetzenden Polymerdispersionen (US-A 4451315). Man erhält damit zwar Vliesstoffe mit hoher Festigkeit; nachteilig bei der Verwendung von wässrigen Bindemitteln ist allerdings der hohe Trocknungsaufwand. Außerdem ist die Verteilung des Bindemittels in der Fasermatrix nicht unproblematisch.

Die Verfestigung von pulverförmigen, vernetzbaren Copolymerisaten auf Basis von Phenol-Formaldehyd-Harzen ist in der US-A 4612224 beschrieben. Nachteilig bei diesem Bindersystem ist die hohe Formaldehyd-Emission bei der Herstellung und Verwendung der so verfestigten Fasermaterialien.

Selbstvernetzende, redispergierbare Dispersionspulver auf der Basis von Vinylester-Copolymerisaten oder (Meth)acrylsäureester-Copolymerisaten als Mittel zur Faserbindung sind in der WO-A 94/20661 beschrieben. Nachteilig bei diesem Bindersystem ist, daß zum Abbinden ein erheblicher Wassereintrag in die Fasermatrix gewährleistet sein muß, was einen hohen Trocknungsaufwand nach sich zieht.

Wärmehärtbare Copolymerisate auf der Basis von Acrylsäureestern und/oder Vinylestern, welche noch (Meth)acrylsäureester von mono- oder polyfunktionellen Hydroxycarbonsäuren und'N-Alkoxyalkyl(meth)acrylamid als Vernetzungskomponente enthalten, sind in der US-A 4129545 als pulverförmige Anstrichmittel beschrieben. Aus der EP-A 721004 sind vernetzbare, in Wasser dispergierbare Pulver bekannt, die sowohl filmbildende Polymere mit mindestens einer funktionellen Gruppe als auch reaktive Komponenten enthalten, welche nach der Dispergierung der Pulver in Wasser kovalente Bindungen bilden. Wässrige Dispersionen der Pulverzusammensetzung werden zur Herstellung von wasserfesten Beschichtungen eingesetzt.

Die DE-A 2604544 betrifft Bindemittel, welche zur Vorverfestigung von Glasfasermaterialien eingesetzt werden, die dann zur Herstellung von glasfaserverstärkten Kunststoffen eingesetzt werden. Wesentlich ist dabei, daß die Vorprodukte eine geringe Eigensteifigkeit aufweisen. Die Einhaltung eines definierten Molekulargewichtsbereiches bei der Verwendung von Polymerisaten zur Textilbindung wird nicht vorbeschrieben und kann auch nicht nahegelegt werden, da die für textile Fertigprodukte angestrebten Festigkeiten bei der Vorverfestigung eher vermieden werden sollen, um die Weiterverarbeitbarkeit zu gewährleisten.

Der Erfindung lag die Aufgabe zugrunde, einen Textilbinder zur Verfügung zu stellen, mit dem die Nachteile der aus dem Stand der Technik bekannten Bindemittel wie mangelnde Festigkeit, hoher Trocknungsaufwand, schlechtes Fließverhalten und ungleichmäßige Verteilung des Bindemittels vermieden werden.

Gegenstand der Erfindung ist die Verwendung einer pulverförmigen, vernetzbaren Textilbinder-Zusammensetzung, enthaltend
a) ein pulverförmiges Mischpolymerisat, erhältlich durch Emulsionspolymerisation und anschließende Trocknung, von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren, wobei das Mischpolymerisat eine Glastemperatur Tg oder einen Schmelzpunkt von größer 40°C, ein Molekulargewicht Mw von 60000 bis 300000 aufweist, und
b) mindestens eine pulverförmige Verbindung, welche zwei oder mehr Epoxid- oder Isocyanatgruppen aufweist und einen Schmelzpunkt von 40°C bis 150°C aufweist, zur Herstellung von polymergebundenen, textilen Formteilen oder Flächengebilden.

Geeignete Mischpolymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten wie Styrol und Vinylchlorid. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alphaverzweigten Monocarbonsäuren mit 5 oder 9 C-Atomen, beispielsweise VeoVa5^{R} oder VeoVa9^{R}. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Wesentlich ist, daß die Zusammensetzung des Mischpolymerisats so gewählt wird, daß eine Glastemperatur Tg oder ein Schmelzpunkt von größer 40°C, vorzugsweise von 55°C bis 150°C resultiert. Die Glasübergangstemperatur Tg und der Schmelzpunkt der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Wichtig für eine gleichmäßige Verteilung des Binderpulvers in dem Fasergebilde ist eine niedrige Schmelzviskosität des Binderpulvers. Die Schmelzviskosität des Bindepulvers wird durch das mittlere Molekulargewicht Mw und die Molekulargewichtsverteilung Mw/Mn des Mischpolymerisats bestimmt. Das gewichtsmittlere Molekulargewicht Mw beträgt zwischen 60000 und 300000. Das Molekulargewicht und die Molekulargewichtsverteilung läßt sich in bekannter Weise während der Polymerisation beispielsweise durch die Verwendung von Reglersubstanzen und über die Polymerisationstemperatur einstellen und kann mittels Gelpermeationschromatcgraphie (GPC) gemessen werden.

Bevorzugte Mischpolymerisate sind Vinylacetat/Vinylchlorid-, Vinylacetat/VeoVa5^{R}-, Vinylacetat/VeoVa9^{R}-, Methylmethacrylat/Butylacrylat- und Styrol/Butylacrylat-Mischpolymerisate, welche jeweils 0.01 bis 25 Gew% der genannten carboxylgruppenhaltigen Monomereinheiten enthalten, und deren Zusammensetzung so gewählt wird, daß die obengenannten Glastemperaturen Tg bzw. Schmelzpunkte resultieren.

Geeignete ethylenisch ungesättigte, carboxylgruppenhaltige Monomere sind ethylenisch ungesättigte Mono- oder Dicarbonsäuren wie Acrylsäure, Methacrylsäure, Maleinsäure, Fumarsäure, Itaconsäure. Vorzugsweise beträgt der Gehalt an carboxylgruppenhaltigen Comonomereinheiten 0.01 bis 10 Gew%, bezogen auf das Gesamtgewicht des Mischpolymerisats.

Gegebenenfalls können die Mischpolymerisate 0.01 bis 10.0 Gew%, bezogen auf das Gesamtgewicht des Mischpolymerisats, noch Hilfsmonomere aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Ccmonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether enthalten.

In einer bevorzugten Ausführungsform enthalten die Mischpolymerisate jeweils 0.01 bis 2 Gew% Acrylsäure und/oder Acrylamid.

Die Herstellung der Mischpolymerisate erfolgt in an sich bekannter Weise, vorzugsweise nach dem Emulsionspolymerisationsverfahren, wie beispielsweise in der WO-A 94/20661 beschriebenen. Zur Herstellung der Pulver wird die dadurch erhältliche Polymerdispersion getrocknet. Die Trocknung kann mittels Sprühtrocknung, Gefriertrocknung oder durch Koagulation der Dispersion und anschließender Wirbelschichttrocknung erfolgen. Bevorzugt wird die Sprühtrocknung. Bevorzugt erfolgt die Herstellung des Mischpolymerisats und dessen Trocknung ohne Zusatz von Schutzkolloid.

Als Vernetzer geeignet sind pulverförmige Verbindungen, welche zwei oder mehr Epoxid- oder Isocyanatgruppen aufweisen, mit einem Schmelzpunkt von 40°C bis 150°C. Beispiele für geeignete Epoxidvernetzer sind solche vom Bisphenol-A-Typ, das heißt Kondensationsprodukte von Bisphenol-A und Epichlorhydrin oder Methylepichlorhydrin. Derartige Epoxidvernetzer sind im Handel, beispielsweise unter den Handelsnamen Epicot oder Eurepox, erhältlich. Geeignete Diisocyanate sind ebenfalls gängige Handelsprodukte, beispielsweise m-Tetramethylxylen-Diisocyanat (TMXDI), Methylendiphenyl-Diisocyanat (MDI). Der Gehalt an Vernetzer beträgt im allgemeinen von 0.1 bis 25 Gew%, vorzugsweise von 4 bis 12 Gew%, bezogen auf das pulverförmige Mischpolymerisat.

In einer bevorzugten Ausführungsform enthält die vernetzbare Textilbinder-Zusammensetzung noch einen Vernetzungskatalysator. Geeignet sind beispielsweise pulverförmige Katalysatoren, welche sich von Triphenylphosphonium-Halogeniden oder quarternären Ammoniumverbindungen ableiten. Beispiele hierfür sind Methyl-, Ethyl-, Propyl-, Butyl-Triphenylphosphonium-Bromid bzw. die entsprechenden Iodide und Chloride. Geeignet sind auch Triphenylphosphonium-Halogenide mit substituiertem Alkylrest wie 2-Carboxyethyl-, 3-Bromopropyl- oder Formylmethyl-Triphenylphosphoniumbromid. Geeignete quarternäre Ammoniumverbindungen sind Tetrabutylammonium-, Benzyltrimethylammonium-, Methyltributylammonium-Salze. Die genannten Verbindungen sind im Handel erhältlich und werden vorzugsweise in Mengen von 0.1 bis 5 Gew%, bezogen auf das pulverförmige Mischpolymerisat, eingesetzt.

Die Herstellung der vernetzbaren Textilbinder-Zusammensetzung erfolgt durch Vermischen der pulverförmigen Komponenten in den angegebenen Mischungsverhältnissen. Hierzu können die bekannten Vorrichtungen zur Mischung von Pulvern eingesetzt werden.

Ein weiterer Gegenstand der Erfindung ist die Verwendung in einem Verfahren zur Herstellung von polymergebundenen, textilen Formteilen oder Flächengebilden aus Fasermaterialien, wobei ein Fasermaterial mit der pulverförmigen,vernetzbaren Textilbinder-Zusammensetzung in Kontakt gebracht wird und bei einer Temperatur von 100 bis 250°C und gegebenenfalls unter Druck verfestigt wird.

Als Fasermaterial sind natürliche oder synthetische Rohstoffe geeignet. Beispiele hierfür sind Kunstfasern auf der Basis von faserbildenden Polymeren wie Viskose-, Polyester-, Polyamid-, Polypropylen-, Polyethylen-Fasern. Geeignet sind auch Glasfasern, Keramikfasern, Mineralfasern. Beispiele für natürliche Fasermaterialien sind Holz-, Cellulose-, Woll-, Baumwolle-, Jute-, Flachs-, Hanf-, Kokos-, Ramie- und Sisalfasern. Die Fasern können auch in Form von gewebten Textilien, von Garnen, oder in Form von Nonwovens wie Gelegen oder Gewirken eingesetzt werden. Diese Nonwovens können gegebenenfalls mechanisch vorverfestigt, beispielsweise genadelt, sein.

Zur Faserbindung wird die Pulvermischung im allgemeinen in einer Menge von 5 bis 30 Gew%, bezogen auf das Fasergewicht eingesetzt.

Zur Herstellung der Formteile oder Flächengebilde kann dabei so vorgegangen werden, daß die Fasermaterialien mit der Pulvermischung vermischt werden und das Gemisch aus Faser und Pulver vor der Verfestigung mittels der üblichen Verfahren der Nonwoven-Technologie, beispielsweise mittels einer Luftlege-, Naßlege-, Direktspinn- oder Krempelvorrichtung, ausgelegt wird. Anschließend wird mittels Temperaturerhöhung, gegebenenfalls unter Anwendung von Druck das textile Flächengebilde gebunden.

Es kann auch so vorgegangen werden, daß vor der Verfestigung die Fasern flächenhaft ausgebreitet werden. Die Verfahren hierzu sind bekannt und primär von der Anwendung, in die das verfestigte Fasermaterial geht, abhängig. Die Fasern könner beispielsweise mittels einer Luftlege-, Naßlege-, Direktspinn- oder Krempelvorrichtung ausgelegt werden. Gegebenenfalls kann vor der Verfestigung mit Bindemittel noch mechanisch verfestigt werden, beispielsweise durch Kreuzlegen, Nadeln oder Wasserstrahlverfestigung. Anschließend wird die Pulvermischung in das ausgelegte Fasermaterial eingestreut, wobei das Pulver flächenförmig, punktförmig oder musterartig in Teilbereiche eingestreut und gegebenenfalls durch Nadeln in das Fasermaterial eingetragen werden kann. Anschließend wird das Fasermaterial durch Anwendung von Temperatur und gegebenenfalls Druck gebunden.

Der pulverförmige Textilbinder eignet sich auch zur Herstellung von Laminaten, wobei zwei Faserlagen miteinander verklebt werden, oder eine Faserlage mit einem weiteren Substrat verklebt wird. Dabei kann so vorgegangen werden, daß eine Faserlage ausgelegt wird, wobei das Bindepulver vorher eingemischt oder nach dem Auslegen eingestreut wird, und eine weitere Faserlage beispielsweise durch Luftlegen aufgelegt wird. Stact der zweiten Faserlage kann auch ein anderes Substrat beispielweise eine Kunststofffolie aufgelegt werden. Anschließend erfolgt die Bindung durch Anwendung von Temperatur und gegebenenfalls Druck. Mit dieser Verfahrensweise werden beispielsweise Dämmstoffe aus Reißbaumwolle, welche mit einem Faservlies als Deckvlies dauerhaft kaschiert sind, zugänglich. Eine weitere Anwendung ist die Verklebung von Glasfasern mit dekorativen Deckfolien oder Deckplatten im Bereich der Bauisolierung oder die Herstellung von Schuhkappen durch Verklebung von Geweben oder Vliesen mit Leder.

Besonders geeignet ist der pulverförmige Textilbinder zur Herstellung von voluminösen Vliesstoffen oder Watten, die beispielsweise als Halbzeuge für die Herstellung von Formteilen aus Fasermaterialien oder als Polster-, Isolier- und Filterwatten Verwendung finden. Dazu wird das Bindepulver in das Fasermaterial eingestreut und das Material durch Temperaturerhöhung, bevorzugt in einem Formwerkzeug, verfestigt.

In einer möglichen Ausführungsform werden die Fasergebilde nach dem Vermischen mit der Pulvermischung oder nach dem Einstreuen der Pulvermischung mit Wasser oder Heißdampf behandelt.

Die **erfindungsgemäß zu verwendende** pulverförmige, vernetzbare Textilbinder-Zusammensetzung zeichnet sich gegenüber wässrigen Bindemitteln dadurch aus, daß die energieaufwendige Trocknung und die Abwasserentsorgung vermieden werden. Gegenüber vorbekannten Pulverbindern liegen die Vorteile darin, daß eine wasser- und lösungsmittelfeste Bindung der Fasern erfolgt, ohne daß Schadstoffe freigesetzt werden, wie dies im Fall von Phenol-Formaldehyd-Harzen oder im Fall von Pulvern, welche nur N-Methylolacrylamid als Vernetzer enthalten, der Fall ist.

Die nachfolgenden Beispiele dienen der weiteren Erläuterung der Erfindung.

### Beispiel 1:

### Herstellung eines carbonsäuregruppenhaltigen Polymerpulvers

In einem Reaktor mit 3 Liter Volumen wurden 838.8 g deionisiertes Wasser und 6.7 g Natriumlaurylsulfat vorgelegt und unter Stickstoff beim Rühren auf 80°C aufgeheizt. Bei dieser Temperatur wurde die Initiatorlösung (6.7 g Kaliumperoxodisulfat und 218.4 g Wasser) in den Reaktor gegeben und aus separaten Behältern wurden innerhalb von 4 Stunden folgende Zusammensetzungen in den Reaktor zudosiert:

| Monomerdosierung 1: | |
|---|---|
| Methacrylsäure | 67.3 g |
| Butylacrylat | 403.7 g |
| Styrol | 861.3 g |
| Dodecylmercaptan | 6.7 g |

| Monomerdosierung 2: | |
|---|---|
| Wasser | 67.3 g |
| Acrylamid (30%) | 44.9 g |

| Initiatordosierung: | |
|---|---|
| Wasser | 217.6 g |
| Kaliumperoxodisulfat | 6.7 g |

Nach den Dosierungen wurde ca. 2 Stunden bei 80°C nachpolymerisiert. Nach dem Abkühlen und dem Einstellen des pH-Wertes auf 8 mittels Ammoniak wurde die Dispersion sprühgetrocknet. Die Glastemperatur dieses Produktes lag bei 59°C.

### Beispiel 2:

### Herstellung eines carbonsäuregruppenhaltigen Polymerpulvers

In einem Reaktor mit 3 Liter Volumen wurden 855 g deionisiertes Wasser und 6.7 g Natriumlaurylsulfat vorgelegt und unter Stickstoff beim Rühren auf 80°C aufgeheizt. Bei dieser Temperatur wurde die Initiatorlösung (6.7 g Kaliumperoxodisulfat und 217.4 g Wasser) in den Reaktor gegeben und aus separaten Behältern wurden innerhalb von 4 Stunden folgende Zusammensetzungen in den Reaktor zudosiert:

| Monomerdosierung 1: | |
|---|---|
| Methacrylsäure | 67.2 g |
| Butylacrylat | 403.4 g |
| Styrol | 860.5 g |
| Dodecylmercaptan | 6.7 g |

| Monomerdosierung 2: | |
|---|---|
| Wasser | 67.3 g |
| N-Methylolacrylamid (48%) | 28.0 g |

| Initiatordosierung: | |
|---|---|
| Wasser | 217.4 g |
| Kaliumperoxodisulfat | 6.6 g |

Nach den Dosierungen wurde ca. 2 Stunden bei 80°C machpolymerisiert Nach dem Abkühlen und dem Einstellen des pH-Wertes auf 8 mittels Ammoniak wurde die Dispersion sprühgetrocknet. Die Glastemperatur dieses Produktes lag bei 59°C.

### Beispiel 3:

### Herstellung der Pulvermischung

98 g des carbonsäuregruppenhaltigen Polymerpulvers aus Beispiel 1 wurde in einem Pulvermischer mit 2 g einer pulverförmigen, multifunktionellen Epoxidverbindung sowie mit 0.5 g Triphenylethylphosphoniumbromid TEP vermischt.

### Beispiel 4:

### Herstellung der Pulvermischung

98 g des carbonsäuregruppenhaltigen Polymerpulvers aus Beispiel 2 wurde in einem Pulvermischer mit 2 g einer pulverförmigen, multifunktionelien Epoxidverbindung sowie mit 0.5 g Triphenylethylphosphoniumbromid TEP vermischt.

### Beispiel 5:

Ein Bindepulver auf Basis eines redispergierbaren selbstvernetzenden Dispersionspulvers nach dem Stand der Technik entsprechend WO-A 94/20661 wurde hergestellt. Dieses Polymerpulver war mittels eines Polyvinylalkohols stabilisiert und enthielt N-Methylolgruppen als vernetzbare Gruppen. Das Molekulargewicht (GPC) betrug ca. 700000 g/mol.

### Herstellung der Faserformkörper (mit Wasser) :

Zur Herstellung von Preßplatten wurden 115 g Reißbaumwolle mit jeweils 13.2 g Bindepulver aus den Beispielen 1 bis 5 vermischt und auf einer Fläche von 24 x 24 cm ausgebreitet. Die Faser/Pulvermischungen wurden noch mit ca. 40 g Wasser mittels Sprühauftrag angefeuchtet und sofort anschließend bei

Temperaturen von ca. 180°C 5 min lang verpreßt, so daß hart verpreßte 2 mm dicke bzw. weiche, 10 mm dicke Platten mit einem Flächengewicht von ca. 2200 g/m² und einem Raumgewicht von ca. 1115 kg/m³ bzw. 223 kg/m³ entstanden.

### Herstellung der Faserformkörper (trocken):

Zur Herstellung von Preßplatten wurden 115 g Reißbaumwolle mit jeweils 13.2 g Bindepulver aus den Beispielen vermischt und auf einer Fläche von 24 x 24 cm ausgebreitet. Die Faser/Pulvermischungen wurden sofort anschließend bei Temperaturen von ca. 180°C 5 min lang verpreßt, so daß hart verpreßte 2 mm dikke bzw. weiche 10 mm dicke Platten mit einem Flächengewicht von ca. 2200 g/m² und einem Raumgewicht von ca. 1115 kg/m³ bzw. 223 kg/m³ entstanden.

### Anwendungstechnische Prüfungen:

### Höchsczugkraft HZK:

Aus den verpreßten faserigen Formkörpern wurden Prüfkörper (Abmessungen: 10 x 100 mm ) herausgestanzt und bei Raumtemperatur auf einer Zwick-Zugprüfmaschine analog DIN 53857 geprüft.

### Wasseraufnahme:

Zur Bestimmung der Wasseraufnahme wurden die trockenen Faserformkörper (Abmessung: 50 x 20 mm) für 1 h bzw. 24 h in Wasser gelagert und die Gewichtsaufnahme infolge Wasserquellung gravimetrisch bestimmt.

### Wärmestand:

Zur Prüfung hinsichtlich des Wärmestandvermögens wurden 240 x 20 mm lange Streifen geschnitten. Diese Streifen wurden waagerecht auf einer planen Unterlage fixiert, so daß die Streifen mit einer Länge von 100 mm über den Rand der Unterlage überstanden. Im Falle der harten Formkörper (Plattendicke 2 mm) wurde ein 40 g-Gewicht angehängt, während die weichen Formkörper (Plattendicke: 10 mm) nur der Schwerkraft ihres Eigengewichts ausgesetzt waren. Das Wärmestandvermögen wurde durch Messung der Durchbiegung d nach einer einstündigen Lagerung bei T = 120°C ermittelt.

Die Ergebnisse der anwendungstechnischen Prüfung sind in den Tabellen 1 und 2 zusammengefaßt.

Die erfindungsgemäß verwendeten Textilbindepulver (Beispiele 3 und 4) zeigen gegenüber den unvernetzten Systemen (Beispiele 1 und 2) einen deutlich höhere HZK sowie einen verbesserten Wärmestand (= verringerte Durchbiegung unter Wärmebelastung)

Ferner zeigen die beiden Tabellen, daß die erfindungsgemäßen Beispiele 3 und 4 gegenüber dem Stand der Technik (Beispiel 5) eine verbesserte Höchstzugkraft bei Raumtemperatur aufweisen. Der Wärmestand der hart verpreßten, hochverdichteten 2 mm dikken Faserformkörper ist zwar im Rahmen der Meßgenauigkeit als gleich anzusehen. Bei den "wattenartigen", weichen Faserformkörpern ist der Wärmestand der erfindungsgemäßen Bindepulver (Beispiele 3 und 4) signifikant gegenüber dem Stand der Technik (Beispiel 5) verbessert.

Beim Herstellen der Faserformkörper ohne Wasserzugabe beim Verpressen erkennt man in allen Fällen eine deutliche Verbesserung (=Verringerung) der Wasserquellung gegenüber dem Stand der Technik.

**Tabelle 1:**

| Prüfungen der harten Formkörper (Flächengewicht: 2200 kg/m², Raumdichte: 1115 kg/m³) | | | | | | |
|---|---|---|---|---|---|---|
| Beispiel Formkörper feucht verpreßt Formkörper trocken verpreßt | | | | | | |
| | HZK | Wärmestand | Wasseraufnahme 1h / 24 h | HZK | Wärmestand | Wasseraufnahme 1h / 24h |
| | [N] | [mm] | [Gew%] | [N] | [mm] | [Gew%] |
| Bsp. 1 | 390 | 70 | 72 / 83 | 282 | 70 | 214 / 238 |
| Bsp. 2 | 440 | 66 | 67 / 83 | 310 | 66 | 198 / 225 |
| Bsp. 3 | 948 | 21 | 48 / 57 | 560 | 22 | 139 / 161 |
| Bsp. 4 | 926 | 19 | 51 / 60 | 526 | 20 | 159 / 180 |
| Bsp. 5 | 326 | 20 | 68 / 79 | 165 | 41 | 253 / 284 |

**Tabelle 2:**

| Prüfungen der weichen Formkörper (Flächengewicht: 2200 kg/m², Raumdichte: 223 kg/m³) | | | | | | |
|---|---|---|---|---|---|---|
| Beispiel Formkörper feucht verpreßt Formkörper trocken verpreßt | | | | | | |
| | HZK | Wärmestand | Wasseraufnahme 1h / 24 h | HZK | Wärmestand | Wasseraufnahme 1h / 24h |
| | [N] | [mm] | [Gew%] | [N] | [mm] | [Gew%] |
| Bsp. 1 | 15.2 | 16 | 602 / 621 | 15.4 | 15 | 728 / 739 |
| Bsp. 2 | 16.3 | 14 | 509 / 550 | 16.2 | 14 | 730 / 741 |
| Bsp. 3 | 18.8 | 8 | 441 / 447 | 18.3 | 11 | 758 / 774 |
| Bsp. 4 | 17.9 | 7 | 423 / 439 | 18.8 | 8 | 721 / 752 |
| Bsp. 5 | 11.9 | 14 | 589 / 662 | 7.9 | 39 | 987 / 994 |

## Patentansprüche

1. Verwendung einer Pulverförmigen vernetzbaren Textilbinder-Zusammensetzung, enthaltend
a) ein pulverförmiges Mischpolymerisat, erhältlich durch Emulsionspolymerisation und anschließende Trocknung, von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren, wobei das Mischpolymerisat eine Glastemperatur Tg oder einen Schmelzpunkt von größer 40°C, ein Molekulargewicht Mw von 60000 bis 300000 aufweist, und
b) mindestens eine pulverförmige Verbindung, welche zwei oder mehr Epoxid- oder Isocyanatgruppen aufweist und einen Schmelzpunkt von 40°C bis 150°C aufweist, zur Herstellung von polymergebundenen, textilen Formteilen oder Flächengebilden.

2. Verwendung nach Anspruch 1, dadurch gekennzeichnet, daß die Zusammensetzung noch 0.1 bis 5 Gew%, bezogen auf das pulverförmige Mischpolymerisat, eines pulverförmigen Vernetzungskatalysators enthält.

3. Verwendung nach Anspruch 1 oder 2, dadurch gekennzeichnet, daß als Mischpolymerisat eines aus der Gruppe Vinylacetat/Vinylchlorid-, Vinylacetat/VeoVa5^{®}-, Vinylacetat/VeoVa9^{®}-, Methylmethacrylat/Butylacrylat- und Styrol/Butylacrylat-Mischpolymerisat, welche jeweils 0.01 bis 25 Gew% der genannten carboxylgruppenhaltigen Monomereinheiten enthalten, eingesetzt wird.

4. Verwendung nach Anspruch 1 bis 3, dadurch gekennzeichnet, daß als carboxylgruppenhaltigen Monomereinheiten solche aus der Gruppe Acrylsäure, Methacrylsäure, Maleinsäure, Fumarsäure, Itaconsäure enthalten sind.

5. Verwendung nach Anspruch 1 bis 4, dadurch gekennzeichnet, daß das Mischpolymerisat noch 0.01 bis 10.0 Gew%, bezogen auf das Gesamtgewicht des Mischpolymerisats, ein oder mehrere Monomere aus der Gruppe der ethylenisch ungesättigten Carbonsäureamide, aus der Gruppe der ethylenisch ungesättigten Sulfonsäuren bzw. deren Salze, aus der Gruppe der mehrfach ethylenisch ungesättigten Comonomeren, und aus der Gruppe der N-Methylol(meth)acrylamide sowie deren Ether wie Isobutoxy- oder n-Butoxyether enthält.

6. Verwendung nach Anspruch 1 bis 5, dadurch gekennzeichnet, daß Acrylsäure und/oder Acrylamid in einer Menge von jeweils 0.01 bis 2 Gew% enthalten ist.

7. Verwendung nach Anspruch 1 bis 6, wobei ein Fasermaterial mit der pulverförmigen, vernetzbaren Textilbinder-Zusammensetzung in Kontakt gebracht wird und bei einer Temperatur von 100°C bis 250°C und gegebenenfalls unter Druck verfestigt wird.

8. Verwendung nach Anspruch 7, dadurch gekennzeichnet, daß als Fasermaterial eines oder mehrere aus der Gruppe Viskose-, Polyester-, Polyamid-, Polypropylen-, Polyethylen-Fasern, Glasfasern, Keramikfasern, Mineralfasern, Holz-, Cellulose-, Woll-, Baumwolle-, Jute-, Flachs-, Hanf-, Kokos-, Ramie- und Sisalfasern, in Form von gewebten Textilien, von Garnen, oder in Form von Nonwovens wie Gelegen oder Gewirken eingesetzt wird.

9. Verwendung nach Anspruch 7 oder 8, dadurch gekennzeichnet, daß die vernetzbare Pulvermischung in einer Menge von 5 bis 30 Gew%, bezogen auf das Fasergewicht, eingesetzt wird.

10. Verwendung nach Anspruch 7 bis 9, dadurch gekennzeichnet, daß die Fasergebilde nach dem Vermischen mit der Pulvermischung oder nach dem Einstreuen der Pulvermischung mit Wasser oder Heißdampf behandelt werden.

## Claims

1. Use of a pulverulent crosslinkable textile binder composition, comprising
a) a pulverulent interpolymer obtainable by emulsion polymerization and subsequent drying of one or more monomers selected from the group consisting of vinyl esters, acrylic esters, methacrylic esters, vinylaromatics and vinyl chloride and of 0.01 to 25% by weight, based on the total weight of the interpolymer, of one or more ethylenically unsaturated carboxyl-containing monomers, the interpolymer having a glass transition temperature Tg or a melting point of greater than 40°C and a molecular weight Mw of 60,000 to 300,000, and
b) at least one pulverulent compound having two or more epoxide or isocyanate groups and a melting point of 40°C to 150°C, for producing polymer bonded textile mouldings or sheet materials.

2. Use according to Claim 1, characterized in that the composition further comprises 0.1 to 5% by weight, based on the pulverulent interpolymer, of a pulverulent crosslinking catalyst.

3. Use according to Claim 1 or 2, characterized in that the interpolymer used is an interpolymer selected from the group consisting of vinyl acetate/vinyl chloride interpolymer, vinyl acetate/VeoVa5^{R} interpolymer, vinyl acetate/VeoVa9^{R} interpolymer, methyl methacrylate/butyl acrylate interpolymer and styrene/butyl acrylate interpolymer, which each contain 0.01 to 25% by weight of the carboxyl-containing monomer units mentioned.

4. Use according to any of Claims 1 to 3, characterized in that the carboxyl-containing monomer units are selected from the group consisting of acrylic acid, methacrylic acid, maleic acid, fumaric acid and itaconic acid.

5. Use according to any of Claims 1 to 4, characterized in that the interpolymer further contains 0.01 to 10.0% by weight, based on the total weight of the interpolymer, of one or more monomers from the group of the ethylenically unsaturated carboxamides, from the group of the ethylenically unsaturated sulphonic acids and salts thereof, from the group of the multiply ethylenically unsaturated comonomers and from the group of the N-methylol(meth)acrylamides and also their ethers such as isobutoxy or n-butoxy ether.

6. Use according to any of Claims 1 to 5, comprising acrylic acid and/or acrylamide in an amount of 0.01 to 2% by weight each.

7. Use according to any of Claims 1 to 6, by contacting a fibre material with the pulverulent crosslinkable textile binder composition and consolidating at a temperature of 100°C to 250°C and optionally under pressure.

8. Use according to Claim 7, characterized in that the fibre material used comprises one or more selected from the group consisting of viscose fibres, polyester fibres, polyamide fibres, polypropylene fibres, polyethylene fibres, glass fibres, ceramic fibres, mineral fibres, wood fibres, cellulose fibres, wool fibres, cotton fibres, jute fibres, flax fibres, hemp fibres, coir fibres, ramie fibres and sisal fibres in the form of woven textiles, in the form of yarns or in the form of nonwovens such as scrims or knits.

9. Use according to Claim 7 or 8, characterized in that the crosslinkable powder mixture is used in an amount of 5 to 30% by weight, based on fibre weight.

10. Use according to any of Claims 7 to 9, characterized in that the fibrous structures are treated with water or superheated steam after the powder mixture has been mixed or sprinkled in.

## Revendications

1. Utilisation d'une composition liante pour textile réticulable sous forme de poudre, contenant
a) un copolymère sous forme de poudre, pouvant être obtenu par polymérisation dans une émulsion et séchage consécutif, d'un ou de plusieurs monomères parmi le groupe comprenant des esters de vinyle, des esters de l'acide acrylique, des esters de l'acide méthacrylique, des aromates de vinyle et du chlorure de vinyle et de 0,01 à 25% en poids, par rapport au poids total du copolymère, d'un ou de plusieurs monomères éthyléniquement insaturés contenant des groupements carboxyle, le copolymère présentant une température vitreuse Tg ou un point de fusion supérieur à 40°C, un poids moléculaire M_{w} de 60 000 à 300 000 et
b) au moins un composé sous forme de poudre, qui présente deux ou plusieurs groupements époxyde ou isocyanate et un point de fusion de 40°C à 150°C, pour la préparation de pièces moulées ou de structures planes textiles, liées par polymère.

2. Utilisation selon la revendication 1, caractérisée en ce que la composition contient encore 0,1 à 5% en poids, par rapport au copolymère sous forme de poudre, d'un catalyseur de réticulation sous forme de poudre.

3. Utilisation selon la revendication 1 ou 2, caractérisée en ce qu'on utilise comme copolymère, un copolymère parmi le groupe des copolymères d'acétate de vinyle et de chlorure de vinyle, d'acétate de vinyle et de veova5®, d'acétate de vinyle et de VeoVa9®, de méthacrylate de méthyle et d'acrylate de butyle, et de styrène et d'acrylate de butyle, qui contiennent à chaque fois 0,01 à 25% en poids des unités monomères contenant des groupements carboxyle mentionnées.

4. Utilisation selon les revendications 1 à 3, caractérisée en ce que les unités monomères contenues, contenant des groupements carboxyle, sont celles parmi le groupe acide acrylique, acide méthacrylique, acide maléique, acide fumarique, acide itaconique.

5. Utilisation selon les revendications 1 à 4, caractérisée en ce que le copolymère contient encore 0,01 à 10,0% en poids, par rapport au poids total du copolymère, d'un ou de plusieurs monomères parmi le groupe des amides d'acide carboxylique éthyléniquement insaturés, parmi le groupe des acides sulfoniques éthyléniquement insaturés ou selon le cas leurs sels, parmi le groupe des comonomères éthyléniquement polyinsaturés et parmi le groupe des N-méthylol(méth)acrylamides ainsi que leurs éthers, tels que l'isobutoxyéther ou le n-butoxyéther.

6. Utilisation selon les revendications 1 à 5, caractérisée en ce que de l'acide acrylique et/ou de l'acrylamide est contenu en une quantité à chaque fois de 0,01 à 2% en poids.

7. Utilisation selon les revendications 1 à 6, un matériau de fibres étant mis en contact avec la composition liante pour textile réticulable sous forme de poudre et consolidé à une température de 100°C à 250°C et le cas échéant sous pression.

8. Utilisation selon la revendication 7, caractérisée en ce qu'on utilise comme matériau de fibres une ou plusieurs fibres parmi le groupe des fibres de viscose, de polyester, de polyamide, de polypropylène, de polyéthylène, des fibres de verre, des fibres de céramique, des fibres minérales, des fibres de bois, de cellulose, de laine, de coton, de jute, de lin, de chanvre, de coco, de ramie et de sisal, sous forme de textiles tissés, de fils ou sous forme de non tissés, tels que des mats ou des tricots.

9. Utilisation selon la revendication 7 ou 8, caractérisée en ce qu'on utilise le mélange réticulable de poudres en une quantité de 5 à 30% en poids par rapport au poids de fibres.

10. Utilisation selon les revendications 7 à 9, caractérisée en ce que les structures de fibres sont traitées, après le mélange avec le mélange de poudres ou après l'entremêlement dans celles-ci du mélange de poudres, avec de l'eau ou de la vapeur chaude.
